# EUROPÄISCHE PATENTANMELDUNG

(11) **EP 4 386 951 A1**
(43) Veröffentlichungstag der Anmeldung: **19.06.2024**
(21) Anmeldenummer: 22213358.9
(22) Anmeldetag: 14.12.2022
(51) Int. Cl.: H01M 50/207, H01M 50/233, H01M 50/247, H01M 50/227

(54) **STRUKTURELEMENT FÜR AKKUMULATOR**

(71) Anmelder: Hilti Aktiengesellschaft, 9494 Schaan (LI)
(72) Erfinder: Harbaum, Julian, 82380 Peißenberg (DE); Löwe, Charlotte, 86899 Landsberg am Lech (DE); Markert, Philipp, 86167 Augsburg (DE); Richter, Rene, 86199 Augsburg (DE)
(74) Vertreter: Hilti Aktiengesellschaft Corporate Intellectual Property

(57) **Zusammenfassung**

Akkumulator, insbesondere als wiederlösbare Energieversorgung für eine Werkzeugmaschine, enthalten wenigstens ein Energiespeicherelement sowie ein Akku-Gehäuse mit einem Deckelelement, vier Seitenwänden und einem Bodenelement.

Eine erste und zweite Erhebung ist an wenigstens dem Bodenelement enthalten, wobei jede Erhebung wenigstens zwei geneigte, gegenüberliegende und aneinandergrenzende Flächen enthält, welche in einem Winkel von 90° bis 120°, vorzugsweise 105°, zueinander angeordnet sind oder jede Erhebung im Wesentlichen kegelförmig ausgestaltet ist, wobei jede kegelförmige Erhebung einen Öffnungswinkel von 90° bis 120°, vorzugsweise 105°, aufweist.

## Beschreibung

Die vorliegende Erfindung betrifft einen Akkumulator, insbesondere als wiederlösbare Energieversorgung für eine Werkzeugmaschine, enthalten wenigstens ein Energiespeicherelement sowie ein Akku-Gehäuse mit einem Deckelelement, vier Seitenwänden und einem Bodenelement.

Akkumulatoren (auch Akku genannt) als Energieversorgung für eine Werkzeugmaschine sind gemäß dem Stand der Technik weitgehend bekannt. Diese Akkumulatoren enthalten für gewöhnlich eine Anzahl an Energiespeicherzellen (auch Akkuzellen genannt), die zum Aufnehmen, Speichern sowie Abgeben von elektrischer Energie dienen und ausgestaltet sind. Das Aufnehmen von elektrischer Energie in die Energiespeicherzellen kann auch als Laden (bzw. Aufladen) bezeichnet werden. Das Abgeben von elektrischer Energie aus den Energiespeicherzellen kann auch als Entladen bezeichnet werden.

Zum Aufladen bzw. Laden mit elektrischer Energie wird der Akkumulator für gewöhnlich mit einer Ladevorrichtung (auch Lader oder Charger genannt) verbunden. Die Ladevorrichtung leitet elektrische Energie gemäß einer vorbestimmten Ladeeinstellung (auch Lademodus genannt) mit festgelegten Parametern für den eigentlichen Ladevorgang an die einzelnen Energiespeicherzellen der Akkumulators.

Der Akkumulator weist für gewöhnlich ein relativ stabiles Gehäuse aus Polyamid oder dergleichen auf. Obgleich das Gehäuse des Akkumulators solide und besonders haltbar für auch extreme Belastungen entwickelt ist, dient es vornehmlich bzw. ausschließlich als Aufbewahrungsbehälter für die Energiespeicherzellen, um diese vor Schmutz, Feuchtigkeit und moderaten mechanischen Beanspruchungen zu schützen.

Eine missbräuchliche Benutzung des Akkumulators, insbesondere die Verwendung des Akkumulators als Hammerersatz, um Nägel in Werkstoffe zu treiben, kann jedoch zu einer dauerhaften Beschädigung und/oder Totalausfall des gesamten Akkumulators führen.

Aufgabe der vorliegenden Erfindung ist das vorstehend beschriebene Problem zu lösen.

Die Aufgabe wird ebenfalls gelöst durch den Gegenstand des Anspruchs 1. Weitere vorteilhafte Ausführungen der Erfindung sind in den entsprechenden Unteransprüchen beschrieben.

Die Aufgabe wird insbesondere gelöst durch einen Akkumulator, insbesondere als wiederlösbare Energieversorgung für eine Werkzeugmaschine, enthalten wenigstens ein Energiespeicherelement sowie ein Akku-Gehäuse mit einem Deckelelement, vier Seitenwänden und einem Bodenelement.

Erfindungsgemäß ist vorgesehen, dass wenigstens eine erste und zweite Erhebung an wenigstens dem Bodenelement enthalten ist, wobei jede Erhebung wenigstens zwei geneigte, gegenüberliegende und aneinandergrenzende Flächen enthält, welche in einem Winkel von 90° bis 120°, vorzugsweise 105°, zueinander angeordnet sind oder jede Erhebung im Wesentlichen kegelförmig ausgestaltet ist, wobei jede kegelförmige Erhebung einen Öffnungswinkel von 90° bis 120°, vorzugsweise 105°, aufweist.

Gemäß einem weiteren Ausführungsbeispiel kann es möglich sein, dass der Winkel 75° bis 90° beträgt. Je spitzer der Winkel desto besser kann ein Nagel (oder dergleichen) so abgelenkt werden, dass der Nagel nicht in das Bodenelement eindringen kann.

Entsprechend einem vorteilhaften Ausführungsbeispiel kann es möglich sein, dass eine konkave Oberfläche zwischen zwei Erhebungen enthalten ist.

Die konkave Oberfläche ist hierbei so ausgestaltet, dass die tiefste Fläche der konkaven Oberfläche zu dem Akkumulator gerichtet ist. Es ist ebenso zu beachten, dass die konkave Oberfläche dabei keinen einzelnen spitzzulaufenden Punkt aufweist, sondern anstelle dessen eine Fläche (bzw. Bodenfläche) an der tiefsten Stelle der konkaven Oberfläche enthalten ist.

Gemäß einem weiteren vorteilhaften Ausführungsbeispiel kann es möglich sein, dass die wenigstens erste und zweite Erhebung an wenigstens dem Deckelelement enthalten sind. Hierdurch kann auf einfache Art und Weise verhindert werden, dass ein Nagel oder dergleichen in das Deckelelement eindringen kann, wenn der Akkumulator an sich (d.h. losgelöst von einer Werkzeugmaschine oder Ladevorrichtung) als Hammerersatz verwendet wird.

Entsprechend einem vorteilhaften Ausführungsbeispiel kann es möglich sein, dass die wenigstens erste und zweite Erhebung an wenigstens einer Seitenwand enthalten sind. Hierdurch kann auf einfache Art und Weise verhindert werden, dass ein Nagel oder dergleichen in eine der Seitenwände eindringen kann, wenn der Akkumulator als Hammerersatz verwendet wird.

Gemäß einem weiteren vorteilhaften Ausführungsbeispiel kann es möglich sein, dass die wenigstens erste und zweite Erhebung im Wesentlich über die gesamte Oberfläche des Bodenelements, des Deckelelements und/oder wenigstens einer Seitenwand angeordnet sind.

Entsprechend einem vorteilhaften Ausführungsbeispiel kann es möglich sein, dass das Bodenelement, Deckelelement und/oder wenigstens eine Seitenwand wenigstens abschnittweise eine Wandstärke von wenigstens 3 mm aufweist. Es ist zu beachten, dass die Wandstärke von dem jeweils verwendeten Material bzw. Werkstoff des Akku-Gehäuses abhängt. Je härter und/oder dichter das jeweils verwendete Material bzw. Werkstoff des Akku-Gehäuses ist, desto dünner kann die Wandstärke sein. Wenn es sich bei dem verwendeten Material bzw. Werkstoff des Akku-Gehäuses um Polyamid handelt, kann die Wandstärke im Wesentlichen 3 mm betragen. Durch die alleinige oder zusätzliche Verwendung von Stahl kann die Wandstärke weniger als 3 mm betragen.

Weitere Vorteile ergeben sich aus der folgenden Figurenbeschreibung. In der Figur ist ein besonders bevorzugtes Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert.

Es zeigt:
- Figur 1: eine seitliche Ansicht auf einen erfindungsgemäßen Akkumulator gemäß einem ersten Ausführungsbeispiel;
- Figur 2: eine perspektivische Ansicht auf einen Teilbereich eines Akku-Gehäuses;
- Figur 3: eine perspektivische Unteransicht auf das Akku-Gehäuse;
- Figur 4: eine frontale Unteransicht auf das Akku-Gehäuse;

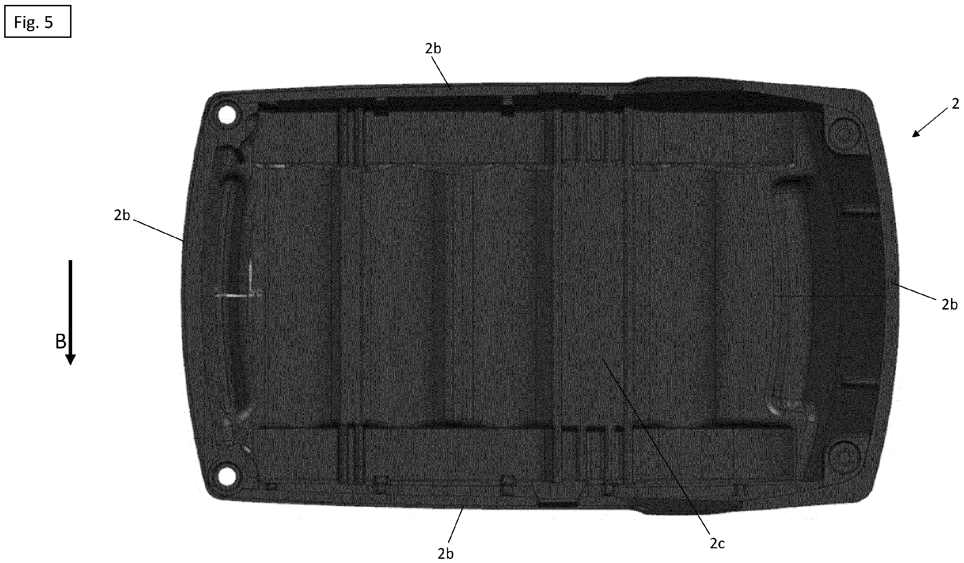

- Figur 5: eine frontale Innenansicht auf das Akku-Gehäuse;

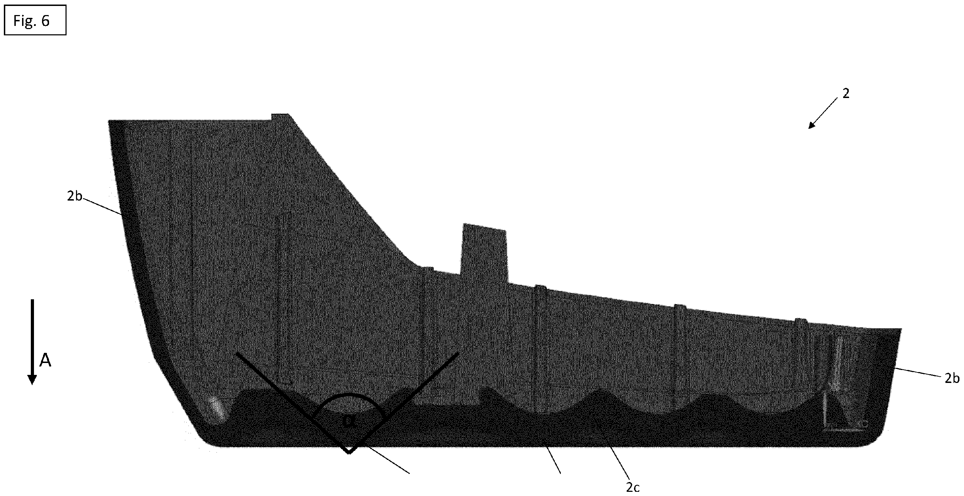

- Figur 6: eine weitere Seitenansicht auf einen Teilbereich des Akku-Gehäuses;
- Figur 7: eine weitere perspektivische Ansicht auf einen Teilbereich des Akku-Gehäuses mit Energiespeicherelementen;
- Figur 8: eine weitere perspektivische Ansicht auf einen Teilbereich des Akku-Gehäuses mit einem Zellhalter für die Energiespeicherelementen;
- Figur 9: eine weitere Seitenansicht auf einen Teilbereich des Akku-Gehäuses mit dem Zellhalter und Energiespeicherelementen;
- Figur 10: eine Teilansicht an den Zellhalter und ein Bodenelement des Akku-Gehäuses;
- Figur 11: eine weitere Seitenansicht auf einen Teilbereich des Akku-Gehäuses mit dem Zellhalter und Energiespeicherelementen;
- Figur 12: eine perspektivische Ansicht auf ein Bodenelement mit einer zweiten Ausführungsform der Erhebungen;
- Figur 13: eine perspektivische Ansicht auf eine einzelne Erhebung gemäß der zweiten Ausführungsform;

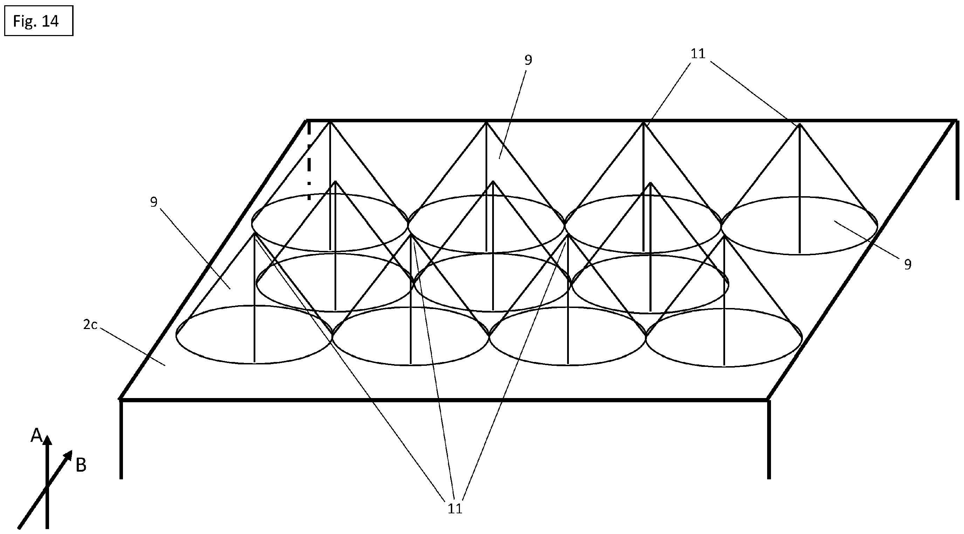

- Figur 14: eine perspektivische Ansicht auf ein Bodenelement mit einer dritten Ausführungsform der Erhebungen;

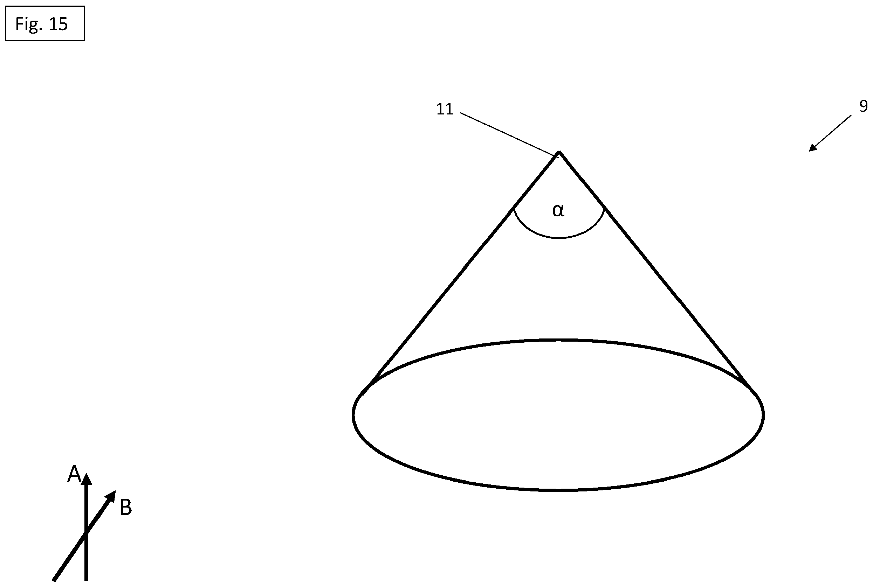

- Figur 15: eine perspektivische Ansicht auf eine einzelne Erhebung gemäß der dritten Ausführungsform;
- Figur 16: eine seitliche Ansicht auf den erfindungsgemäßen Akkumulator gemäß einem weiteren Ausführungsbeispiel; und
- Figur 17: eine seitliche Ansicht auf den erfindungsgemäßen Akkumulator mit aufrecht angeordneten Energiespeicherzellen.

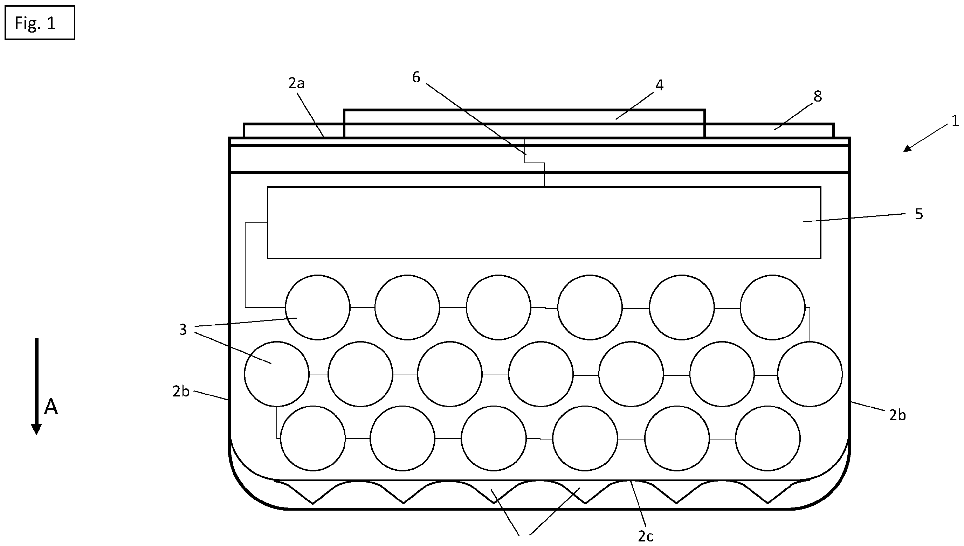

Figur 1 zeigt einen Akkumulator 1 gemäß einer beispielhaften Ausführungsform.

Der Akkumulator 1 kann mit einer Werkzeugmaschine wiederlösbar verbunden werden, um die Werkzeugmaschine mit elektrischer Energie zu versorgen. Die Werkzeugmaschine ist in den Figuren nicht dargestellt kann jedoch in Form eines Bohrhammers, Bohrmaschine, Akku-Schraubers, Schleifgerät, Säge oder dergleichen ausgestaltet sein.

Der Akkumulator 1 enthält dabei im Wesentlichen ein Akku-Gehäuse 2, eine Anzahl an Energiespeicherzellen 3, eine Akku-Schnittstelle 4, sowie eine Steuerungseinrichtung 5.

Die Energiespeicherzellen 3 können auch als Akku-Zellen bezeichnet werden.

Das Akku-Gehäuse 2 enthält dabei im Wesentlichen ein Deckelelement 2a, vier Seitenwände 2b und ein Bodenelement 2c. Das Bodenelement 2c ist in Richtung A an dem Akku-Gehäuse 2 positioniert.

Die Akku-Schnittstelle 4 dient zum elektrischen bzw. elektronischen sowie mechanischen Verbinden des Akkumulators 1 mit der Werkzeugmaschine oder mit einer Ladevorrichtung.

Die Ladevorrichtung ist ebenfalls nicht in den Figuren dargestellt dient jedoch zum Aufladen der Energiespeicherzellen des Akkumulators mit elektrischer Energie.

Die Energiespeicherzellen 3 dienen zum Aufnehmen, Speichern und erneuten Abgeben elektrischer Energie.

Wie in den Figuren angedeutet, sind die Energiespeicherzellen 3 in zylindrischer Form und auf Basis einer Lithium-Ionen-Technologie ausgestaltet. Jede Energiespeicherzelle 3 enthält an einem Ende eine Kontakteinrichtung, die zur Übertragung elektrischer Energie dient.

Die einzelnen Kontakteinrichtung sind über entsprechende Leitungen 6 mit der Steuerungseinrichtung 5 verbunden.

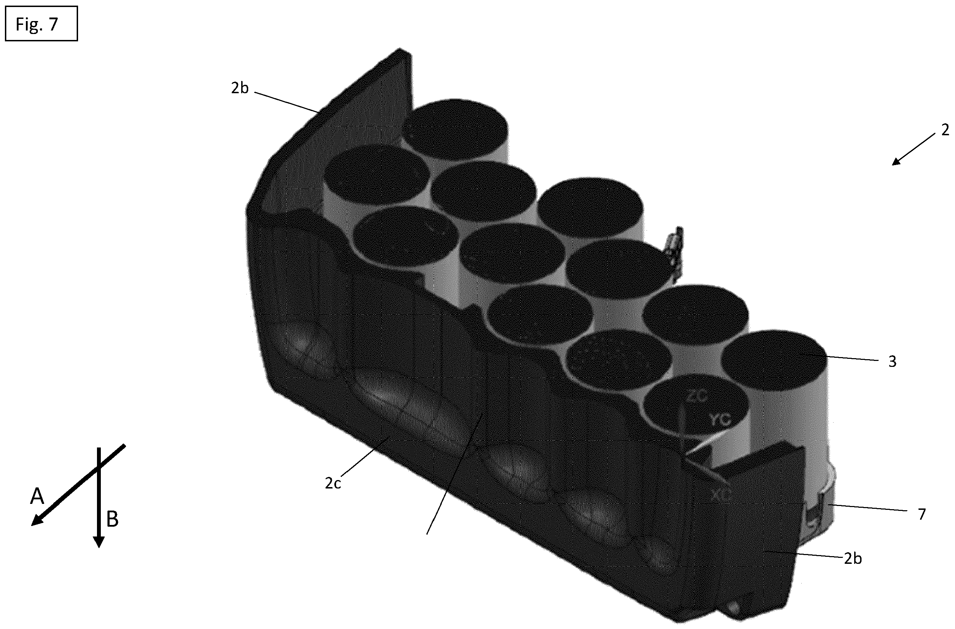

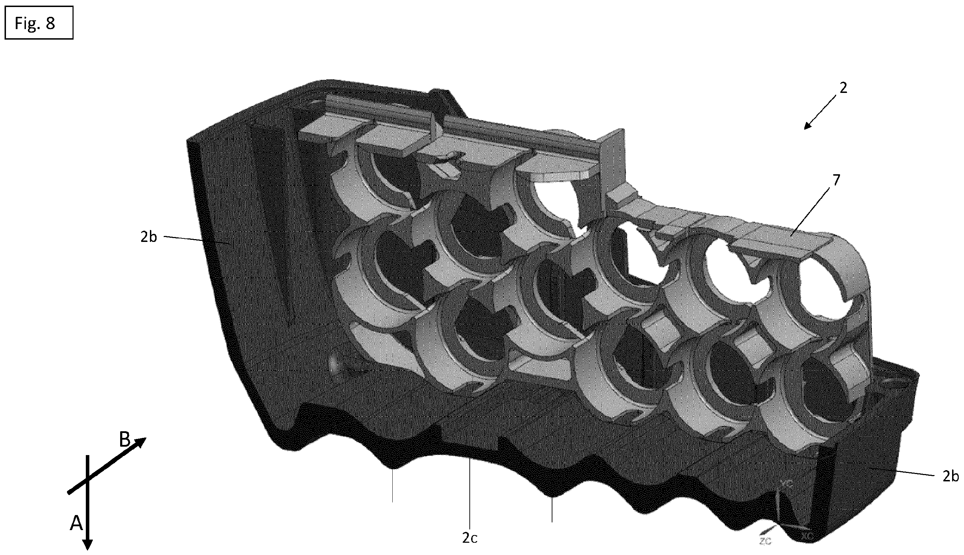

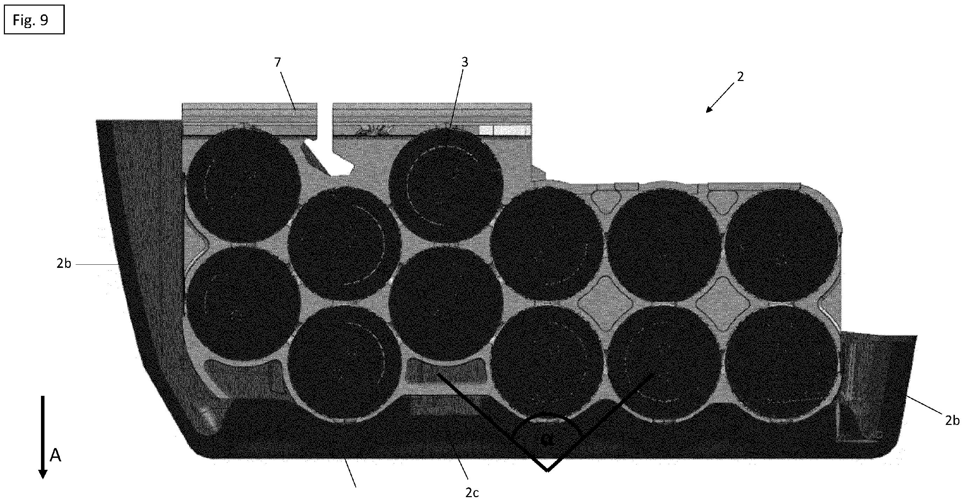

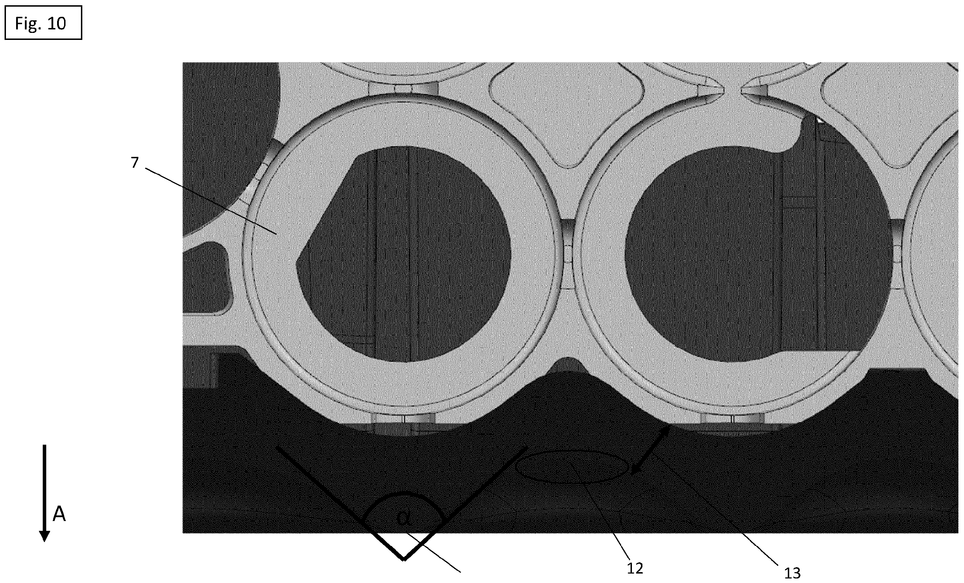

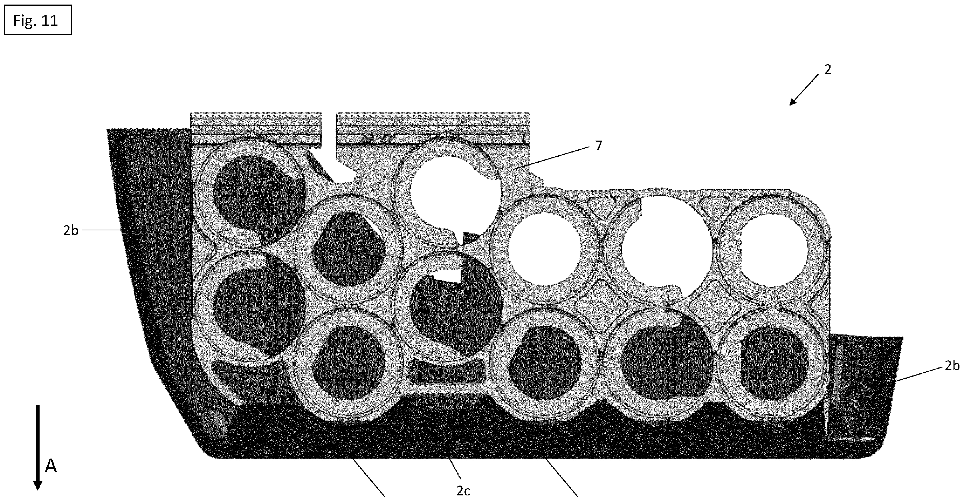

Wie in den Figuren 7 bis 11 angedeutet sind die Energiespeicherzellen 3 durch einen Zellhalter 7 im Inneren des Akku-Gehäuses 2 ortsfest positioniert. In den Figuren 7 bis 11 ist der Zellhalter 7 lediglich teilweise gezeigt.

Alternativ können die Energiespeicherzellen 3 auch auf einer anderen geeigneten Technologie basieren.

Die Kontakteinrichtung sind in den Figuren nicht gezeigt.

Die zylindrische Form der Energiespeicherzellen 3 ist ebenfalls optional, sodass auch jede andere geeignete Form bzw. Geometrie gewählt werden kann. So ist es insbesondere auch möglich, dass die Energiespeicherzellen 3 als Pouchzellen ausgestaltet sind.

Es ist zudem auch möglich, dass der Akkumulator 1 sowohl zylindrische Energiespeicherzellen 3 als auch Pouch-Zellen enthält. Es ist insbesondere möglich, dass der Akkumulator 1 eine einzige zylindrische Energiespeicherzelle 3 und eine einzige Pouchzelle enthält.

Die Steuerungseinrichtung 5 regelt und steuert verschiedene Funktionen des Akkumulators 1. Darüber hinaus ist die Steuerungseinrichtung 5 so mit den Energiespeicherzellen 3 und der Akku-Schnittstelle 4 über entsprechende Leitungen 6 verbunden, dass elektrische Energie von den Energiespeicherzellen 3 über die Steuerungseinrichtung 5 zu der Akku-Schnittstelle 4 gelangen kann.

Zum wiederlösbaren mechanischen Koppeln des Akkumulators 1 mit der Werkzeugmaschine ist eine Schienenvorrichtung 8 vorgesehen.

Eine (in den Figuren nicht gezeigte) Verriegelungsvorrichtung dient zum wiederlösbaren Verbinden des Akkumulators 1 mit der (nicht gezeigten) Werkzeugmaschine.

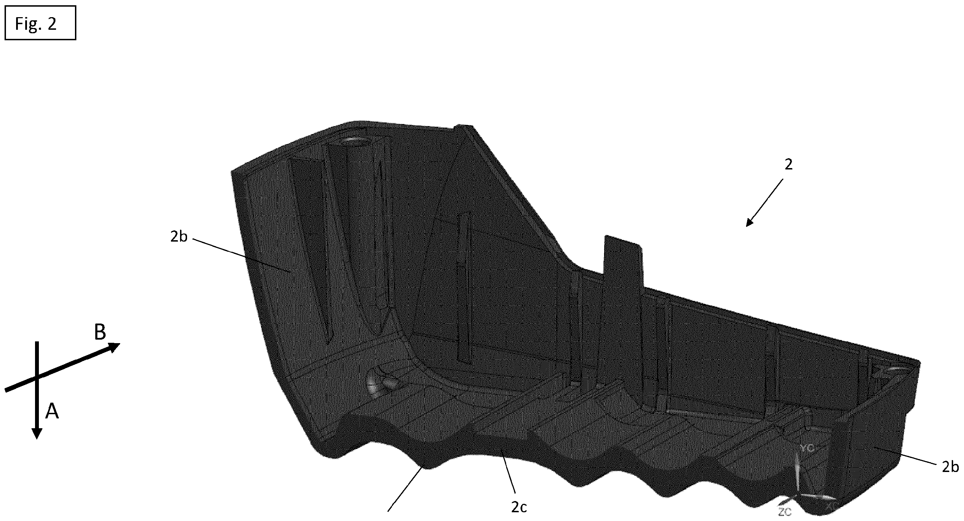

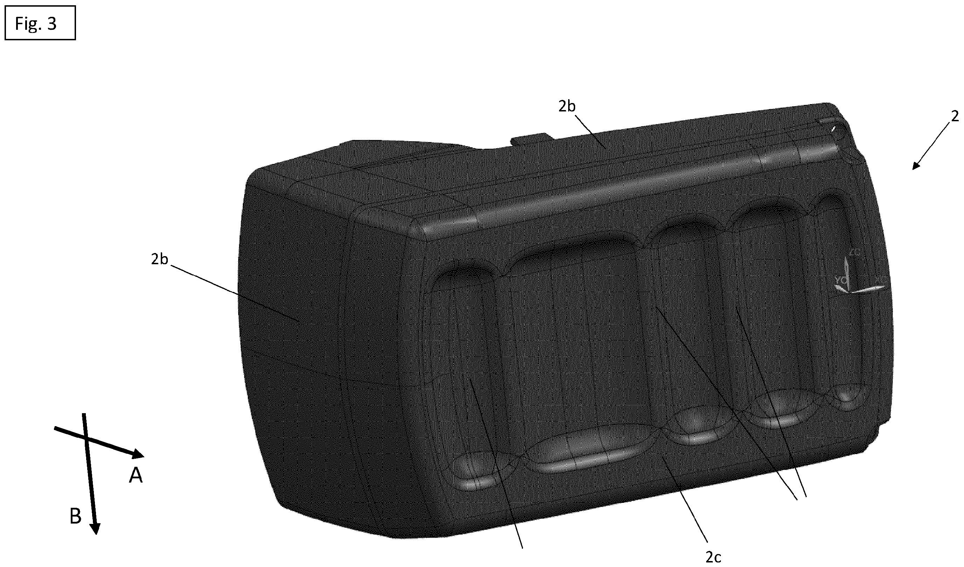

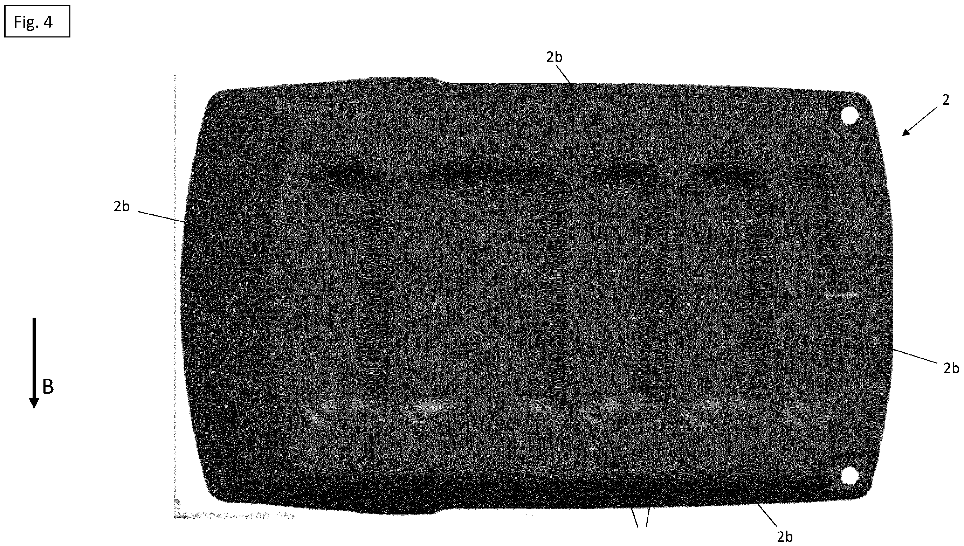

Gemäß einer ersten Ausführungsform des erfindungsgemäßen Akkumulators 1 sind an dem Bodenelement 2c des Akku-Gehäuses eine Vielzahl an Erhebungen 9 positioniert. Wie insbesondere in den Figuren 2 bis 4 ersichtlich, sind die Erhebungen 9 entsprechend der ersten Ausführungsform in länglicher Ausgestaltung in Richtung B über fast die gesamte Breite des Bodenelements 2c angeordnet. Die Erhebungen 9 verlaufen dabei im Wesentlichen parallel zueinander. Wie insbesondere in den Figuren 7 bis 9 angedeutet, sind die in Richtung A untersten Energiespeicherzellen 3 zu den Erhebungen 9 ausgerichtet bzw. positioniert.

Gemäß ersten Ausführungsform enthält jede Erhebung 9 zwei geneigte, gegenüberliegende und aneinandergrenzende Flachen 10 (bzw. Seitenflächen): Die Spitze 11, d.h. die Seitenkante, an der die beiden Flächen 10 aneinandergrenzen, zeigt in Pfeilrichtung A und damit von dem Bodenelement 2c weg. Der Winkel α zwischen den Flächen beträgt 105°.

Alternativ kann der Winkel α zwischen den Flächen auch zwischen 90° und 120° betragen. Es ist auch möglich, dass der Winkel α zwischen den Flächen zwischen 75° und 90° beträgt.

Wie ebenfalls in den Figuren angedeutet ist der Bereich (mit anderen Worten: das Tal zwischen zwei Erhebungen) in Form einer konkaven Oberfläche 12 ausgestaltet. Die korrespondierende konvexe Oberfläche zeigt in das Innere des Akku-Gehäuses.

Darüber hinaus beträgt die Wandstärke 13 des Bodenelements 3 mm. Alternativ kann die Wandstärke 13 auch mehr oder weniger als 3 mm betragen. Des Weiteren beträgt die Wandstärke einer Seitenwand 2b und des Deckelelements 2a auch 3 mm.

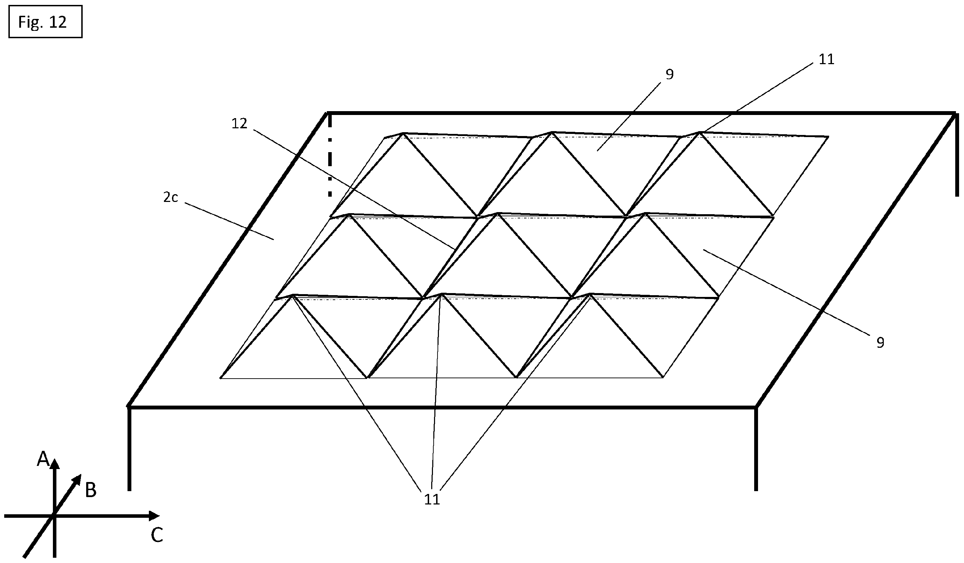

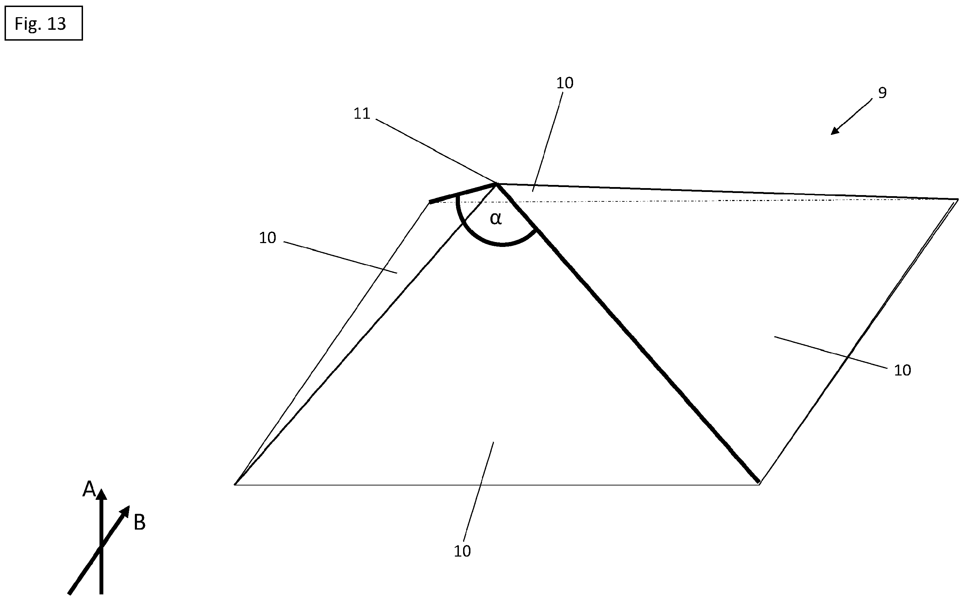

Gemäß einer weiteren Ausführungsform des erfindungsgemäßen Akkumulators 1, weisen die Erhebungen 9 jeweils vier Flächen (bzw. Seitenflächen) auf. Die Erhebungen 9 sind damit in Form von Pyramiden ausgestaltet, vgl. Figur 12 und 13.

Wie in den Figuren angedeutet sind die pyramidenförmigen Erhebungen 9 so zueinander ausgerichtet, dass mehrere Erhebungen 9 in mehreren Reihen entlang der Richtung B und C angeordnet sind. Die Reihen von Erhebungen 9 entlang der Richtung B sowie die Reihen entlang der Richtung C sind im Wesentlichen parallel zueinander angeordnet. Die Reihen von Erhebungen 9 entlang der Richtung C sind im Wesentlichen orthogonal bzw. rechtwinklig zu den Reihen von Erhebungen 9 entlang der Richtung B positioniert. Die Spitzen der pyramidenförmigen Erhebungen 9 verlaufen entlang den jeweiligen Richtungen B und C im Wesentlichen in einer geraden Linie.

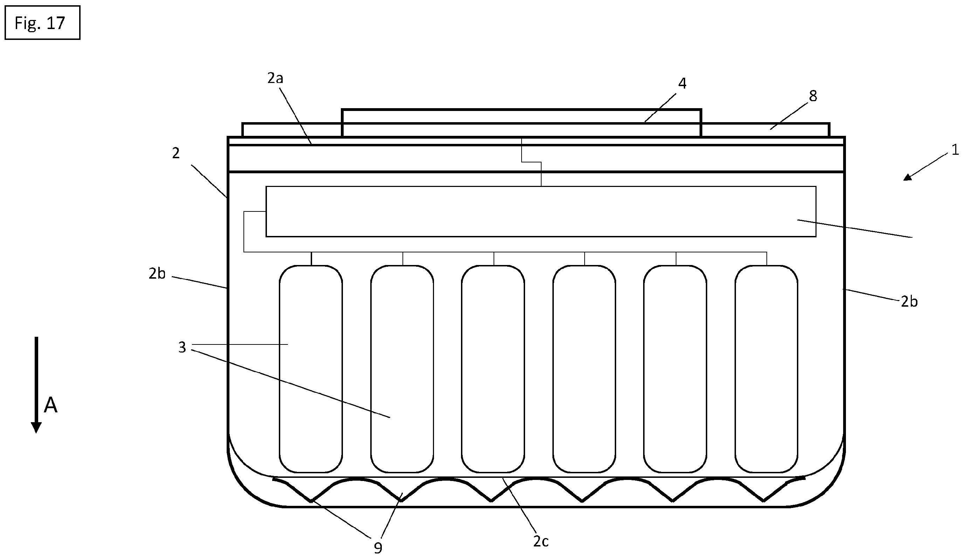

In Figur 17 ist ein weiteres Ausführungsbeispiel des erfindungsgemäßen Akkumulators 1 gezeigt. In diesem Ausführungsbeispiel sind die Erhebungen 9 in Form von Kegeln ausgestaltet. In den Figuren sind die kegelförmigen Erhebungen 9 mit einer Spitze dargestellt.

Gemäß einer alternativen Ausführungsform kann die Spitze der kegelförmigen Erhebungen 9 auch stumpf bzw. abgerundet sein. Darüber hinaus ist es auch möglich, dass die Erhebungen 9 im Wesentlichen als Kegelstumpfe ausgestaltet sind.

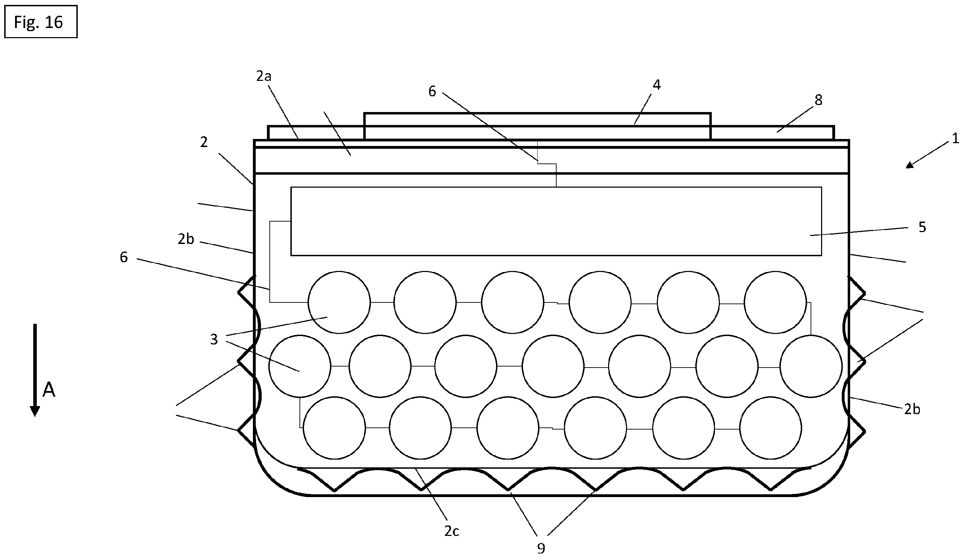

Entsprechend einer weiteren Ausführungsform des erfindungsgemäßen Akkumulators 1 sind die Erhebungen 9 an dem Deckelelement 2a und/oder an den Seitenwänden 2b des Akku-Gehäuses 2 positioniert, vgl. Figur 16.

In Figur 17 ist ein weiteres Ausführungsbeispiel des erfindungsgemäßen Akkumulators 1 gezeigt. Die Energiespeicherzellen 3 des Akkumulators 1 sind dabei aufrecht entlang der Richtung A zueinander angeordnet. Die Erhebungen 9 sind in Richtung A unter einer jeden Energiespeicherzelle 3 angeordnet.

### Bezugszeichenliste

- 1: Akkumulator
- 2: Akku-Gehäuse
- 2a: Deckelelement
- 2b: Seitenwand
- 2c: Bodenelement
- 3: Energiespeicherzelle
- 4: Akku-Schnittstelle
- 5: Steuerungseinrichtung
- 6: Leitung
- 7: Zellhalter
- 8: Schienenvorrichtung
- 9: Erhebung
- 10: Fläche einer Erhebung
- 11: Spitze einer Erhebung
- 12: konkave Oberfläche
- 13: Wandstärke des Bodenelements

## Patentansprüche

1. Akkumulator (1), insbesondere als wiederlösbare Energieversorgung für eine Werkzeugmaschine, enthalten wenigstens ein Energiespeicherelement (3) sowie ein Akku-Gehäuse (2) mit einem Deckelelement (2a), vier Seitenwänden (2b) und einem Bodenelement (2c),
**dadurch gekennzeichnet, dass** wenigstens eine erste und zweite Erhebung (9) an wenigstens dem Bodenelement (2c) enthalten ist, wobei jede Erhebung (9) wenigstens zwei geneigte, gegenüberliegende und aneinandergrenzende Flächen (10) enthält, welche in einem Winkel (α) von 90° bis 120°, vorzugsweise 105°, zueinander angeordnet sind oder jede Erhebung (9) im Wesentlichen kegelförmig ausgestaltet ist, wobei jede kegelförmige Erhebung (9) einen Öffnungswinkel (α) von 90° bis 120°, vorzugsweise 105°, aufweist.

2. Akkumulator (1) nach Anspruch 1,
**dadurch gekennzeichnet, dass** eine konkave Oberfläche (12) zwischen zwei Erhebungen (9) enthalten ist.

3. Akkumulator (1) nach Anspruch 1 oder 2,
**dadurch gekennzeichnet, dass** die wenigstens erste und zweite Erhebung (9) an wenigstens dem Deckelelement (2a) enthalten sind.

4. Akkumulator (1) nach Anspruch 1,
**dadurch gekennzeichnet, dass** die wenigstens erste und zweite Erhebung (9) an wenigstens einer Seitenwand (2b) enthalten sind.

5. Akkumulator (1) nach Anspruch 1,
**dadurch gekennzeichnet, dass** die wenigstens erste und zweite Erhebung (9) im Wesentlich über die gesamte Oberfläche des Bodenelements (2c), des Deckelelements (2a) und/oder wenigstens einer Seitenwand (2b) angeordnet sind.

6. Akkumulator (1) nach Anspruch 1,
**dadurch gekennzeichnet, dass** das Bodenelement (2c), Deckelelement (2a) und/oder wenigstens eine Seitenwand (2b) wenigstens abschnittweise eine Wandstärke (12) von wenigstens 3 mm aufweist.
